# FASCICULE DE BREVET EUROPEEN

(11) **EP 3 310 591 B1**
(45) Date de publication et mention de la délivrance du brevet: **03.04.2019**
(21) Numéro de dépôt: 16729247.3
(22) Date de dépôt: 10.06.2016
(51) Int. Cl.: B60C 11/00, B60C 11/11, B60C 11/14, B60C 9/00, B60C 9/18, B60C 11/03

(54) **PNEUMATIQUE AVEC UN SOMMET COMPORTANT UN ÉLÉMENT DE RENFORCEMENT ET UNE BANDE DE ROULEMENT À FORTE ADHÉRENCE**
LUFTREIFEN MIT EINEM DECKENBEREICH MIT EINEM VERSTÄRKUNGSELEMENT UND EINER LAUFFLÄCHE MIT HOHER BODENHAFTUNG
PNEUMATIC TIRE HAVING A CROWN THAT COMPRISES A REINFORCING ELEMENT AND A HIGH-TRACTION TREAD

(30) Priorité: 19.06.2015 FR 1555665
(43) Date de publication de la demande: 25.04.2018
(73) Titulaire: Compagnie Générale des Etablissements Michelin, 63000 Clermont-Ferrand (FR)
(72) Inventeur: PALLOT, Patrick, 63040 Clermont-Ferrand Cedex 9 (FR); DAVAL, Bertrand, 63040 Clermont-Ferrand Cedex 9 (FR); REYNAL DE ST-MICHEL, Rémi, 63040 Clermont-Ferrand Cedex 9 (FR)
(74) Mandataire: Bauvir, Jacques
(86) Numéro de dépôt international: PCT/EP2016/063376
(87) Numéro de publication internationale: WO 2016/202703

(56) Documents cités:
- FR-A1- 2 938 791
- FR-A1- 2 987 310
- FR-A1- 2 999 116
- JP-A- 2014 113 921

## Description

### Domaine de l'invention

La présente invention est relative aux pneumatiques, et plus particulièrement à un pneumatique dont les performances d'adhérence sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient «plus proche, respectivement plus éloigné, de l'axe de rotation du pneumatique, selon une direction radiale ». Le plan équatorial est un plan perpendiculaire à l'axe de rotation du pneumatique, positionné axialement de façon à couper la surface de la bande de roulement sensiblement à mi-distance des bourrelets. Les expressions « axialement intérieur, respectivement axialement extérieur » signifient «plus proche, respectivement plus éloigné, du plan équatorial du pneumatique, selon la direction axiale ».

### État de la technique

De manière connue en soi, la bande de roulement d'un pneumatique pour application à des véhicules routiers, qu'il soit destiné à équiper un véhicule de tourisme ou un véhicule poids lourd, est pourvue d'une sculpture comprenant des blocs de sculpture délimités par diverses rainures, les unes orientées circonférentiellement, d'autres orientées axialement ou d'autres encore orientées de façon oblique par rapport à la direction axiale. Les blocs de sculpture peuvent en outre comporter diverses incisions ou lamelles plus fines. Les rainures constituent des canaux destinés à évacuer l'eau lors d'un roulage sur sol mouillé et les parois de ces rainures définissent ce qui est appelé des bords d'attaque et des bords de fuite des éléments de sculpture, en référence au sens du roulage.

Pour améliorer l'adhérence d'un pneumatique, et plus particulièrement pour l'adhérence sur sol sec et sur sol humide pour des roulages non hivernaux, il est bien connu d'utiliser pour la bande de roulement un mélange caoutchouteux de rigidité faible (c'est-à-dire également de dureté faible, d'où la désignation usuelle de mélange mou). Un exemple en est donné par le document FR 2 987 310 A1. Cette diminution de rigidité de la bande de roulement permet à celle-ci de mieux épouser la surface du sol de roulage, notamment de bien épouser la rugosité du sol, et ainsi la surface réelle de contact avec le sol de roulage s'en trouve augmentée et la performance d'adhérence améliorée par rapport à une bande de roulement dont le mélange caoutchouteux est plus rigide.

Un tel choix s'avère très performant pour des pneumatiques dont la sculpture ne comporte pas ou comporte peu de rainures orientées plutôt circonférentiellement. Cependant, afin de favoriser une bonne évacuation de l'eau et permettre de maintenir la surface de roulement du pneumatique bien en contact avec le sol en utilisation sur sol détrempé, il est nécessaire que la sculpture comporte suffisamment de rainures orientées plutôt circonférentiellement. Dans cette dernière configuration, l'utilisation d'un mélange caoutchouteux de bande de roulement moins rigide favorise le cisaillement des blocs de sculpture, leur basculement, et cela génère de fortes surpressions sur les bords d'attaque des blocs de sculpture, ce qui conduit à des échauffements très importants. Ces surpressions et ces échauffements peuvent contribuer à un endommagement très rapide de la bande de roulement du pneumatique et à une exploitation non optimale du potentiel d'adhérence du mélange de la bande de roulement, notamment le potentiel d'adhérence dans une direction axiale (aussi appelée adhérence transversale).

Pour améliorer la performance d'adhérence transversale de pneumatiques dont la bande de roulement comprend une pluralité de rainures circonférentielles délimitées par des faces latérales en vis-à-vis et un fond de rainure, le document WO 2011/073022 A1 propose de disposer, sous la nappe carcasse et même sous la couche intérieure d'étanchéité, une nappe de renfort comportant des éléments de type câble, orientés sensiblement radialement.

Cependant, non seulement la réalisation industrielle d'un tel pneumatique s'avère assez couteuse, mais en outre l'effet de renforcement reste limité.

Par ailleurs, l'état de la technique connait aussi diverses propositions de conception de pneumatiques correspondant à des objectifs particuliers, tel que créer une couche formant barrière à l'eau (FR 2 938 791 A1), ou améliorer la longévité kilométrique et l'aptitude au rechapage de pneumatiques pour poids lourds (FR 2 999 116 A1), ou encore, une composition de caoutchouc pour améliorer l'adhérence sur sol humide (JP 2014/113921). Aucun de ces enseignements ne permet cependant d'améliorer les performances d'un pneumatique du type de celui cité au paragraphe 5 ci-dessus.

L'objectif de la présente invention est de proposer une meilleure alternative afin de réaliser un pneumatique capable d'une bien meilleure performance en adhérence transversale.

### Brève description de l'invention

L'invention concerne un pneumatique comportant une armature de ceinture, disposée dans le sommet, le plus souvent radialement à l'extérieur d'une armature de carcasse. Selon la direction radiale, l'armature de ceinture est un empilage d'au moins deux nappes couplées avec une nappe de carcasse ; lesdites au moins deux nappes sont constituées le plus souvent de câbles métalliques, lesdits câbles métalliques formant typiquement un angle avec la direction circonférentielle compris entre +10° et +40° pour l'une de ces nappes et compris entre -10° et -40° pour l'autre de ces nappes.

L'invention a pour objet un pneumatique comportant :
- deux bourrelets ;
- deux flancs reliés aux bourrelets ;
- un sommet relié de chaque côté à l'extrémité radialement extérieure de chacun des flancs, le sommet comportant :
   - une armature de ceinture ayant une largeur axiale W,
   - une bande de roulement, la bande de roulement comprenant une pluralité de blocs de sculpture, deux blocs de sculpture axialement adjacents étant séparés par une rainure s'étendant au moins en partie circonférentiellement, chacune rainure étant délimitée radialement vers l'intérieur par un fond de rainure ;
   caractérisé en ce que le matériau constitutif de la bande de roulement a un module dynamique de cisaillement G* inférieur à 1.25 MPa, et en ce que le sommet comporte une couche de renforcement en matériau de renforcement à élasticité constante circonférentiellement, la couche de renforcement s'étendant axialement sur une largeur WR valant au minimum 50% de la largeur axiale W de l'armature de ceinture (W étant défini comme la largeur axiale de la plus large des nappes disposées radialement à l'extérieur de la nappe de carcasse), et s'étendant radialement sur une épaisseur T comprise entre l'extrémité radialement supérieure de l'armature de ceinture et une limite radiale supérieure située radialement vers l'intérieur du fond de rainure, le matériau à élasticité constante circonférentiellement constitutif de la couche de renforcement ayant un module MA10 supérieur à 10 MPa.

En précisant que le matériau de renforcement de la couche de renforcement est « à élasticité constante circonférentiellement », on indique que ledit matériau est plutôt de type couche de caoutchouc et non pas un composite comme une nappe de renforcement comportant des câbles ; ajoutons que ladite couche de renforcement peut être réalisé de propriétés identiques dans toutes les directions (dans ce cas, elle serait isotrope) ou les propriétés de ladite couche de renforcement doivent être constantes circonférentiellement et peuvent varier axialement. Ce matériau de renforcement est par exemple de type élastomérique. En variante, le matériau de renforcement peut être de type thermoplastique, ou un mélange de matériau de type élastomérique et de type thermoplastique. Dans la suite de la description, l'invention est illustrée par l'emploi de matériau élastomérique, sans que ce choix ne soit limitatif.

Le module dynamique de cisaillement G* est mesuré à 60°C et sous une contrainte alternée à 10 Hz de 0.7 MPa. On appelle «module MA10» le module d'allongement mesuré à 10% de déformation et à 23°C. Par sa forte raideur en compression, la couche de renforcement s'oppose à la flexion du sommet dans un plan qui comprend l'axe de rotation du pneumatique (flexion méridienne) et ainsi s'oppose au basculement des éléments de sculpture. Cela permet de conserver une surface de contact avec le sol de roulage importante ; cela permet de limiter les surpressions sur le bord d'attaque des blocs de sculpture et ainsi de limiter les échauffements, en particulier selon une caractéristique préférentielle dans laquelle le matériau de renforcement constitutif de la couche de renforcement a un module MA10 élevé, supérieur à 15, et de préférence supérieur à 20 MPa, voire supérieur à 30 MPa.

La couche de renforcement proposée par l'invention est réalisée en matériau considérablement plus dur que les sous-couches souvent insérées dans le sommet entre l'armature de ceinture et la bande de roulement, comme par exemple décrit dans le document FR 2 954 333. En effet, traditionnellement, on utilise des matériaux de sous-couche sous la bande de roulement de manière à améliorer la résistance au roulement du pneumatique avec un matériau peu hystérétique ou pour rigidifier la bande de roulement en cisaillement, mais avec des rigidités plus modestes ne permettant pas de rigidifier suffisamment le sommet en flexion méridienne et donc ne permettant pas de limiter le basculement des blocs de sculpture sous un fort effort transversal. Même dans les variantes de rigidités les plus élevées, le module MA10 n'atteint jamais 10 MPa.

De manière à ne pas augmenter le volume du pneumatique, la couche de renforcement selon l'invention peut se substituer avantageusement aux matériaux présents en général à la base de la bande de roulement. On trouve en général sous le fond de rainure une épaisseur de matériau de l'ordre de 2 mm qui amène une protection de l'armature de ceinture aux agressions que subit le pneumatique en usage. La couche de renforcement de la présente invention peut apporter une protection suffisante contre ces agressions, ce qui permet de diminuer les épaisseurs de matériau dont on a parlé ci-dessus. Cette réduction d'épaisseur permet par ailleurs d'augmenter la rigidité de cisaillement de la bande de roulement et ainsi de contribuer à améliorer la tenue de route en transversal du véhicule.

### Brève description des figures

Les objets de l'invention sont maintenant décrits à l'aide du dessin annexé, dans lequel :
- la figure 1 représente de manière très schématique (sans respect d'une échelle spécifique), une coupe radiale d'un pneumatique conforme à un mode de réalisation de l'invention ;
- les figures 2 à 5 sont des coupes radiales partielles du sommet de pneumatiques illustrant des variantes de réalisation de l'invention.

### Description détaillée de l'invention

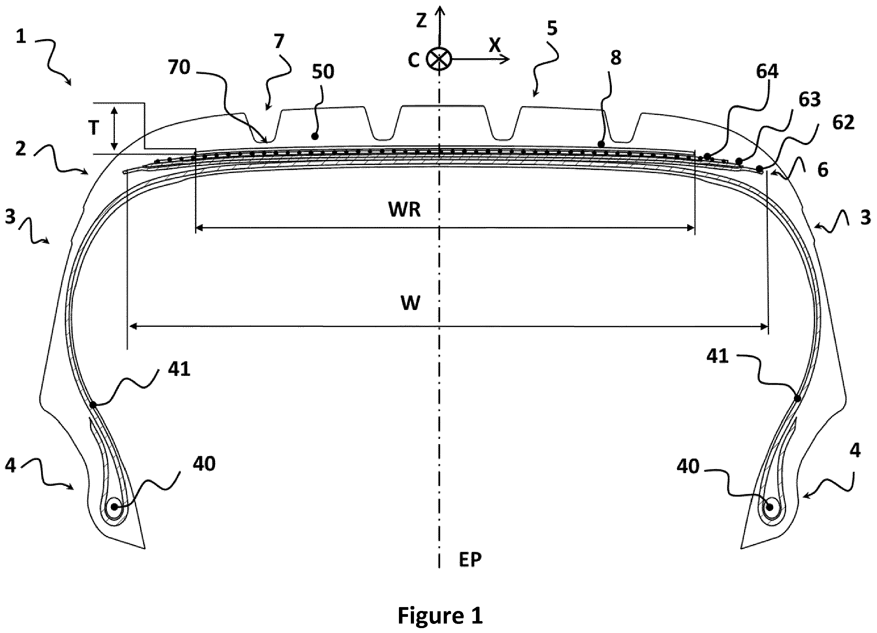

On voit à la figure 1 un pneumatique 1 comprenant un sommet 2, deux flancs 3 reliés chacun à un bourrelet 4. Le sommet 2 est relié de chaque côté à l'extrémité radialement extérieure de chacun des deux flancs. Le sommet 2 comporte une bande de roulement 5. La figure 1 montre un plan équatorial EP, plan perpendiculaire à l'axe de rotation du pneumatique, situé à mi-distance des deux bourrelets 4 et passant par le milieu de l'armature de ceinture ; la figure 1 indique aussi, par des flèches disposées juste au-dessus de la bande de roulement 5, sur le plan équatorial EP, les directions axiale X, circonférentielle C et radiale Z.

Chaque bourrelet comporte une tringle 40. Une nappe de carcasse 41 est enroulée autour de chaque tringle 40. La nappe de carcasse 41 est radiale et est, de manière connue en soi, constituée par des câbles (dans ce cas de mise en oeuvre, des câbles textiles) disposés sensiblement parallèlement les uns aux autres et s'étendant d'un bourrelet à l'autre de façon telle qu'ils forment un angle compris entre 80° et 90° avec le plan équatorial EP.

La bande de roulement 5 comprend une pluralité de blocs de sculpture 50. Deux blocs de sculpture 50 axialement adjacents sont séparés par une rainure 7 s'étendant au moins en partie circonférentiellement ; chacune rainure 7 est délimitée radialement vers l'intérieur par un fond 70 de rainure.

Le sommet 2 comporte une armature de ceinture 6 comportant ladite nappe de carcasse 41 et deux nappes de ceinture 62, 63. De façon très classique, les nappes de ceinture 62, 63 sont formés par des câbles métalliques arrangés parallèlement entre eux. De façon bien connue, les éléments de renforcement que forment les câbles de la nappe de carcasse 41 et les câbles des nappes de ceinture 62, 63 sont orientés selon au moins trois directions différentes de façon à former une triangulation. L'armature de ceinture est de largeur axiale W, mesurée d'une extrémité axiale à l'autre de la plus large (62) des nappes de ceinture.

Le pneumatique 1 comporte une nappe de frettage 64 constituée de renforts de frettage formé par des fibres organiques ou polyamide aromatique, lesdits renforts de frettage formant, avec la direction circonférentielle un angle au plus égal à 5°. La nappe de frettage 64 est disposée radialement à l'extérieur des nappes de ceinture 62, 63, c'est-à-dire à l'extérieur des câbles formant triangulation de l'armature de ceinture 6. La nappe de frettage 64 est, dans cette mise en oeuvre de l'invention, disposée radialement intérieurement à la couche de renforcement 8.

Il est à noter que la nappe de frettage 64 est en général réalisée par enroulement d'une bandelette comportant plusieurs câbles disposés parallèlement les uns aux autres, sous forme d'un semi-fini comportant non seulement les câbles textile, mais aussi une gomme dite de calandrage. En général, toutes les nappes comportent un gomme de calandrage, que ce soit la ou les nappes de carcasse, les nappes de ceinture : elles sont constituées par des éléments de renforcement filaires, monofilamentaires ou câblés, enrobés de gomme de calandrage les liant entre eux pour former un semi-fini de fabrication ; la gomme de calandrage est de composition choisie en général pour répondre à la fois aux impératifs de procédé de fabrication et aussi pour conférer au pneumatique en tant que produit fini des caractéristiques appropriées. Rappelons au passage qu'il existe des procédés de fabrication où la dépose de câbles de nappe de ceinture est faite fil par fil sur une ébauche de pneumatique en cours de construction, sans passer par l'étape de fabrication d'un semi-fini comme une nappe calandrée ; l'invention est compatible avec un tel procédé. Toutes ces considérations ne sont qu'un rappel de données techniques bien connues de l'homme du métier et ne font pas en soi partie de l'invention.

La couche de renforcement en matériau élastomérique 8 est intercalée entre la bande de roulement 5 et l'extrémité radialement extérieure de l'armature de ceinture 6. Dans cet exemple, la couche de renforcement est continue et isotrope. De préférence, la couche de renforcement en matériau élastomérique 8 est proche de la fibre neutre mécanique de l'ensemble structurel formé par le sommet 2 du pneumatique. A cette fin, pour une application aux dimensions de pneumatiques usuelles pour véhicules de tourisme, la couche de renforcement en matériau élastomérique 8 a une épaisseur inférieure à 1.5 mm.

La couche de renforcement en matériau élastomérique 8 s'étend axialement sur une largeur WR, et s'étend radialement entre l'extrémité radialement supérieure de l'armature de ceinture et la bande de roulement, sur une épaisseur T, mesurée dans la direction radiale. L'épaisseur T est inférieure à l'épaisseur de la bande de roulement en fond de rainure, et de préférence inférieure à 75% de l'épaisseur de la bande de roulement en fond de rainure.

A titre d'exemple, la largeur WR vaut 140 mm pour un pneumatique de dimension 225/45 R 17, soit 70% de la largeur W de l'armature du sommet. Au moins 70% de ladite largeur WR de la couche de renforcement en matériau élastomérique est disposée d'un côté du plan équatorial EP, à savoir le côté destiné à être monté à l'extérieur du véhicule, c'est dire celui le plus sollicité dans des virages pris à vitesse soutenue. Dans certaines mises en oeuvre de l'invention, le pneumatique est alors asymétrique. Cependant, ceci n'a aucun caractère impératif, le pneumatique selon l'invention pouvant très bien être symétrique axialement. De préférence, la couche de renforcement en matériau élastomérique s'étend sur une largeur WR valant au maximum la largeur axiale W. Avantageusement, la couche de renforcement en matériau élastomérique s'étend sur une largeur WR valant au maximum 70% de la largeur axiale W de l'armature de ceinture.

On a vu que le matériau constitutif de la bande de roulement 5 est un matériau élastomérique de module dynamique de cisaillement G* inférieur à 1.25 MPa. On entend par « matériau constitutif de la bande de roulement » le matériau qui comprend au moins 50% du volume compris entre la surface de contact avec le sol à l'état neuf et un niveau correspondant à 1,6 mm radialement vers l'extérieur du fond 70 de rainure 7 (1,6 mm étant la hauteur habituelle des témoins d'usure). De préférence, le matériau constitutif de la bande de roulement 5 est un matériau élastomérique de module dynamique de cisaillement G* inférieur à 1.1 MPa, et de façon avantageuse, inférieur à 0.9 MPa.

Pour la réalisation d'un matériau élastomérique constitutif de la bande de roulement 5 ayant un module dynamique de cisaillement G* valant 0,9MPa, on peut se reporter par exemple à la formulation ci-dessous :

**Tableau 1 : formulation**

| Composition | Exemple (pce) |
|---|---|
| SBR (a) | **100** |
| Silice (b) | **110** |
| Agent de couplage (c) | **9** |
| Plastifiant liquide (d) | **20** |
| Plastifiant résine (e) | **50** |
| Noir | **5** |
| Oxyde de zinc | **3** |
| Acide stéarique | **2** |
| Antioxydant (f) | **2** |
| Accélérateur (g) | **2** |
| DPG | **2** |
| Soufre | **1** |

| | |
|---|---|
| avec: (a) SBR avec 27% styrène, butadiène -1,2 :5%, cis-1,4 :15%, trans -1,4: 80% Tg -48°C (b) Silice « Zeosill 165MP » de la société Solvay de surface BET 160m²/g (c) Silane TESPT «SI69» de la société Evonik (d) Huile TDAE « Flexon 630 » de la société Shell (e) Résine « Escorez 2173 » de la société Exxon (f) Antioxydant « Santoflex 6PPD » de la société Solutia (g) Accélérateur « Santocure CBS » de la société Solutia | |

**Tableau 2: Propriétés mécaniques des compositions après vulcanisation**

| Composition | Exemple |
|---|---|
| Module G* à 60°C (MPa) | **0,9** |
| Tg (°C) Tanδ max | **-10** |

Dans la suite, on donne un exemple de formulation appropriée pour le matériau de la couche de renforcement de module MA10 supérieur à 50 MPa :

| Composition | Exemple (pce) |
|---|---|
| NR | 100 |
| Noir de Carbone | 70 |
| Résine Formophénolique | 12 |
| ZnO | 3 |
| Acide stearique | 2 |
| 6PPD | 2.5 |
| HMT | 4 |
| Soufre | 3 |
| CBS | 2 |

L'invention trouve une application tout particulièrement intéressante lorsque les rainures 7 ou certaines d'entre elles s'étendent circonférentiellement. Il peut très bien s'agir de rainures qui ne sont pas orientées exactement circonférentiellement mais peuvent être obliques par rapport au plan équatorial EP. Rappelons que les moyens de l'invention permettent de combattre efficacement la tendance au basculement de blocs de sculpture. Cette tendance au basculement, toute autres choses égales par ailleurs, sera d'autant plus importante qu'il y a des rainures orientées circonférentiellement et que la bande de roulement est en gomme molle de façon à favoriser l'adhérence. Comme le basculement des blocs de sculpture est particulièrement préjudiciable sur sollicitations du pneumatique dans le sens transversal, l'invention trouve un terrain d'application tout particulièrement intéressant en présence de rainures en bonne partie orientées circonférentiellement. Bien entendu, il peut en outre y avoir des rainures orientées principalement axialement, et dans ce cas l'invention permet de combattre le basculement des blocs de sculpture en cas de sollicitation longitudinale, provenant d'un couple important, par exemple en freinage d'urgence. La couche de renforcement en matériau élastomérique 8 est en liaison directe avec l'armature de sommet 6 du pneumatique 1. Cela permet de rigidifier le sommet et limite efficacement, voire empêche le basculement des blocs de sculpture 50 de la bande de roulement 5.

### Tests

L'invention a été testée en réalisant des pneumatiques dans la dimension 225/45 R 17. Le pneumatique de référence est un pneumatique MICHELIN Pilot Sport 3, sauf le mélange de bande roulement, remplacé par le mélange de l'invention, à savoir un matériau élastomérique dont la formulation a été donnée ci-dessus. Le pneumatique de test est dérivé du pneumatique MICHELIN Pilot Sport 3 pour les éléments non spécifiques de la présente invention et non indiqués dans le tableau ci-dessous.

Les pneumatiques ont été mesurées sur une machine de type « flat track » sur un sol adhérisé avec une animation machine reproduisant les conditions d'un pneumatique sur un circuit comme le circuit d'Estoril. La performance du pneumatique est alors mesurée par son niveau de poussée transversale maximale dans les virages lors de cette animation machine.

Le tableau 3 ci-dessous présente le gain de poussée apporté par l'invention, en intégrant une couche de renforcement de module MA10 valant 55 MPa et avec une bande de roulement de module dynamique de cisaillement G* valant 0.9 MPa. Le pneumatique de test possède une couche de renforcement de 140 mm de large et d'épaisseur 1.2 mm. Les pneumatiques sont également mesurés en résistance à l'avancement (RRT), ce qui montre que la solution permet de gagner en poussée transversale maximale sans pénaliser la résistance à l'avancement.

**Tableau 3 : tests comparatifs**

| **Tests** | **Témoin** | **Solution skim BT** |
|---|---|---|
| RRT | Base 100 | -0.1 kg/T |
| Poussée transversale maximale | Base 100 | 103 |

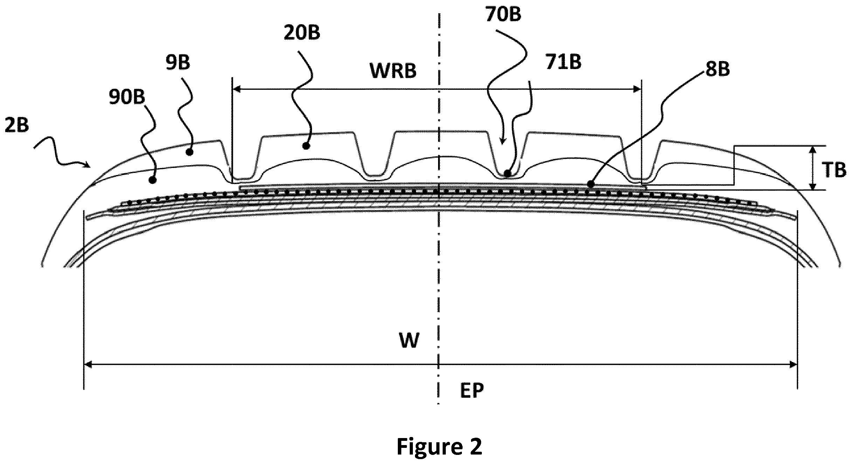

A la figure 2, on voit une coupe radiale d'un sommet 2B d'un pneumatique comportant une couche de renforcement en matériau élastomérique 8B selon une première variante de réalisation de l'invention. Dans cette variante, la couche de renforcement en matériau élastomérique 8B est directement adjacente à la nappe radialement la plus à l'extérieur de l'armature de ceinture, tout comme dans l'exemple illustré à l'aide de la figure 1. Le matériau de la couche de renforcement en matériau élastomérique 8B peut être identique à celui de l'exemple précédent. La couche de renforcement en matériau élastomérique 8B est coiffée radialement vers l'extérieur par une sous-couche 90B, elle-même recouverte radialement vers l'extérieur par une bande de roulement caoutchouteuse 9B. La couche de renforcement en matériau élastomérique 8B s'étend axialement sur une largeur WRB, et s'étend radialement entre l'extrémité radialement supérieure de l'armature de ceinture et la sous-couche 90B, sur une épaisseur TB (mesuré radialement). La sous-couche 90B est d'épaisseur variable, d'épaisseur moindre sous les rainures 70B qu'en semelle de blocs 20B de sculpture. La sous-couche 90B n'est pas apparente en surface du pneumatique, pas même en fond 71B de rainure 70B.

La présente invention permet de rigidifier le sommet en flexion en dehors du plan des nappes de sommet et dans le plan des nappes de sommet en flexion sur champ, sans pénaliser la résistance au roulement. Il est alors possible de combiner la présente invention avec différentes variantes de réalisation d'une sous-couche dans une bande de roulement. La sous-couche peut être une sous-couche de basse hystérèse pour réduire la résistance au roulement de la bande de roulement ou bien alors une sous-couche rigide pour augmenter la rigidité en cisaillement de la bande de roulement et ainsi la poussée du pneumatique en virage.

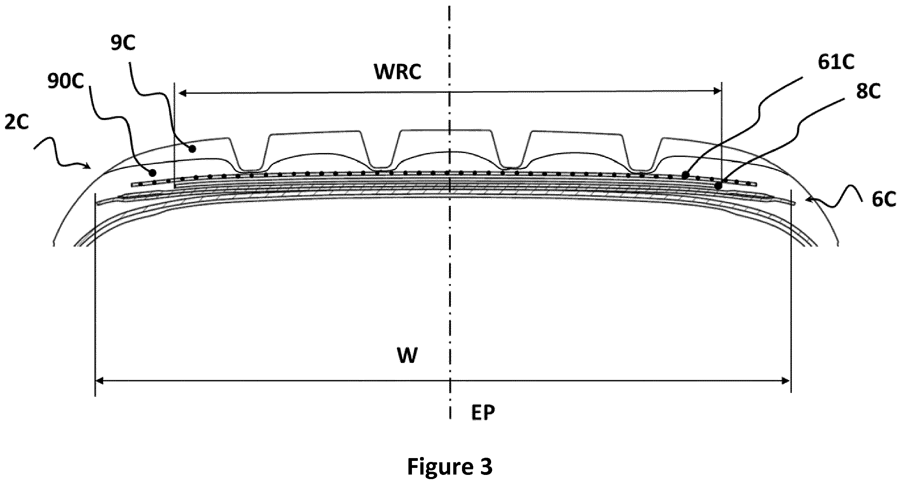

A la figure 3, on voit une coupe radiale d'un sommet 2C d'un pneumatique comportant une couche de renforcement en matériau élastomérique 8C selon une deuxième variante de réalisation de l'invention. La couche de renforcement en matériau élastomérique 8C est intégrée dans l'épaisseur de l'empilage de nappes comportant des câbles et formant globalement l'armature de ceinture 6C. Le matériau de la couche de renforcement en matériau élastomérique 8C peut être identique à celui des exemples précédents. La couche de renforcement en matériau élastomérique 8C est ici directement recouverte radialement vers l'extérieur par une nappe de frettage 61C, la nappe de frettage étant donc disposée radialement extérieurement à la couche de renforcement 8C ; la nappe de frettage 61C est constituée de renforts de frettage formé par des fibres organiques ou polyamide aromatique, enrobés dans un mélange élastomérique, lesdits renforts de frettage formant, avec la direction circonférentielle un angle au plus égal à 5°. La nappe de frettage 61C est directement recouverte radialement vers l'extérieur par une sous-couche 90C, elle-même réalisée avec le même matériau que dans la première variante de réalisation de l'invention, la sous-couche étant comme connu en soi directement recouverte radialement vers l'extérieur par une bande de roulement caoutchouteuse 9C.

L'avantage de cette variante est que la couche de renforcement coopèrent de meilleure façon avec les nappes sommets afin d'obtenir un meilleur effet de renforcement en flexion.

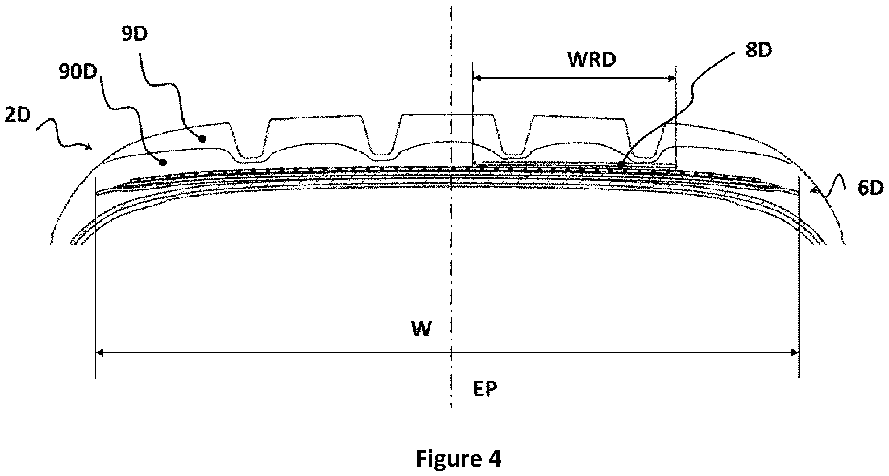

A la figure 4, est illustrée une troisième variante de réalisation fort proche de la première variante, si ce n'est que le sommet 2D comporte une couche de renforcement en matériau élastomérique 8D disposée de façon non symétrique dans la largeur du sommet du pneumatique. Cette disposition rend bien entendu le pneumatique non symétrique ; il est avantageux que la couche de renforcement en matériau élastomérique 8D soit décalée du côté du pneumatique destiné à être orienté à l'extérieur du véhicule. En effet, lors de sollicitations transversales de niveau élevé, c'est de ce côté qu'apparaissent les plus importantes des sollicitations tendant à faire basculer les blocs de sculpture. Ainsi, on peut atteindre un niveau de renforcement du pneumatique suffisant tout en utilisant moins de matière. Par ailleurs, tout comme dans la précédente variante, l'armature de ceinture 6D est surmontée par une nappe de frettage, elle-même directement surmontée radialement par une sous-couche 90D, elle-même directement surmontée radialement par une bande de roulement caoutchouteuse 9D.

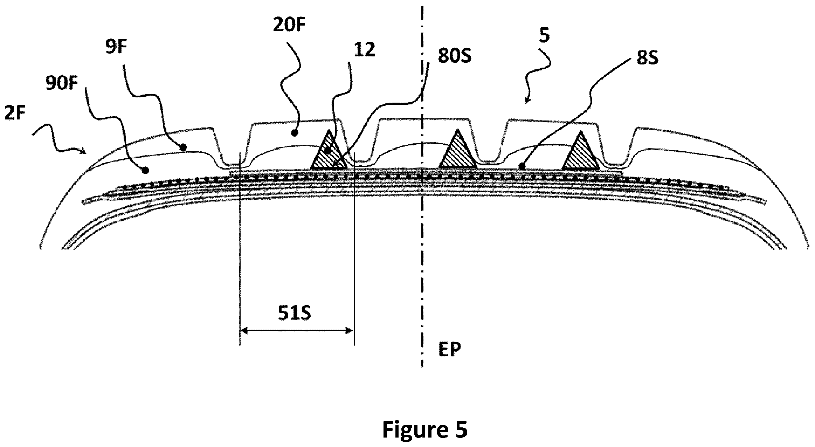

A la figure 5, est illustrée une quatrième variante de réalisation dans laquelle le sommet 2F comporte un bloc de sculpture 20F comportant un élément d'amarrage 12 en forme de coin. Cet élément d'amarrage 12 s'étend radialement de la surface radialement extérieure 80S de la couche de renforcement 8S vers l'extérieur de la bande de roulement 5 jusqu'à une hauteur radiale supérieure à 75% de l'épaisseur radiale de la bande de roulement. Ledit élément d'amarrage 12 est de largeur axiale variable, depuis une valeur maximale inférieure à 50% de la largeur axiale 51S dudit bloc, ladite largeur axiale allant en décroissant lorsque l'on se déplace radialement vers le haut. Ledit élément d'amarrage est constitué d'un mélange caoutchouteux de rigidité élevée. L'angle des deux parois latérales dudit élément d'amarrage est de préférence compris entre 35 et 45 degrés, soit par exemple 40°, comme illustré à la figure 5. Le matériau constitutif de l'élément d'amarrage a de préférence un module d'allongement MA10 supérieur à 10 MPa. De façon avantageuse, c'est le même matériau que le matériau de la couche de renforcement 8S. Par ailleurs, le sommet 2F une sous-couche 90F, elle-même directement surmontée radialement par une bande de roulement caoutchouteuse 9F.

## Revendications

1. Pneumatique (1) comprenant :
- deux bourrelets (4) ;
- deux flancs (3) reliés aux bourrelets (4) ;
- un sommet (2), un sommet relié de chaque côté à l'extrémité radialement extérieure de chacun des flancs, le sommet comportant :
• une armature de ceinture (6) ayant une largeur axiale W,
• une bande de roulement (5), la bande de roulement comprenant une pluralité de blocs (50) de sculpture, deux blocs de sculpture axialement adjacents étant séparés par une rainure (7) s'étendant au moins en partie circonférentiellement, chacune rainure étant délimitée radialement vers l'intérieur par un fond (70) de rainure ;
**caractérisé en ce que** le matériau constitutif de la bande de roulement (5) a un module dynamique de cisaillement G* inférieur à 1.25 MPa, mesuré à 60°C et sous une contrainte alternée à 10 Hz de 0.7 MPa, **en ce que** le sommet comporte une couche de renforcement (8) en matériau de renforcement à élasticité constante circonférentiellement, la couche de renforcement s'étendant axialement sur une largeur WR valant au minimum 50% de la largeur axiale W de l'armature de ceinture, et s'étendant radialement sur une épaisseur T comprise entre l'extrémité radialement supérieure de l'armature de ceinture (6) et une limite radiale supérieure située radialement vers l'intérieur du fond (70) de rainure, le matériau à élasticité constante circonférentiellement constitutif de la couche de renforcement ayant un module MA10 supérieur à 10 MPa.

2. Pneumatique selon la revendication 1, dans lequel l'épaisseur T est inférieure à 75% de l'épaisseur de la bande de roulement en fond de rainure.

3. Pneumatique selon l'une des revendications 1 ou 2, dans lequel le matériau à élasticité constante circonférentiellement, constitutif de la couche de renforcement, a un module MA10 supérieur à 30 MPa.

4. Pneumatique selon l'une quelconque des revendications 1 à 3, dans lequel la couche de renforcement est continue et en matériau isotrope.

5. Pneumatique selon l'une des revendications 1 à 4, dans lequel au moins 70% de ladite largeur WR de la couche de renforcement est disposé d'un côté du plan équatorial perpendiculaire à l'axe de rotation du pneu.

6. Pneumatique selon l'une quelconque des revendications 1 à 5, dans lequel la couche de renforcement s'étend sur une largeur WR valant au minimum 70% de la largeur axiale W de l'armature de ceinture.

7. Pneumatique selon l'une quelconque des revendications 1 à 6, dans lequel le matériau de renforcement est de type élastomérique.

8. Pneumatique l'une quelconque des revendications 1 à 6, dans lequel le matériau de renforcement est de type thermoplastique.

9. Pneumatique selon l'une des revendications 1 à 8, dans lequel le matériau constitutif de la bande de roulement (5) a un module dynamique de cisaillement G* inférieur à 1.1 MPa.

10. Pneumatique selon l'une des revendications 1 à 8, dans lequel le matériau constitutif de la bande de roulement (5) a un module dynamique de cisaillement G* inférieur à 0.9 MPa.

11. Pneumatique selon l'une des revendications 1 à 10, comportant une nappe de frettage (64) constituée de renforts de frettage, lesdits renforts de frettage formant, avec la direction circonférentielle, un angle au plus égal à 5°, et dans lequel la nappe de frettage est disposée radialement extérieurement à l'armature de ceinture (6).

12. Pneumatique selon l'une des revendications 1 à 10, comportant une nappe de frettage (64) constituée de renforts de frettage, lesdits renforts de frettage formant, avec la direction circonférentielle, un angle au plus égal à 5°, et dans lequel la nappe de frettage est disposée radialement extérieurement à la couche de renforcement (8).

13. Pneumatique selon l'une des revendications 1 à 12, dans lequel au moins un bloc de sculpture comporte un élément d'amarrage (12) s'étendant radialement de la surface radialement extérieure (80S) de ladite couche de renforcement (8S) vers l'extérieur de la bande de roulement (5) jusqu'à une hauteur radiale supérieure à 75% de l'épaisseur radiale de la bande de roulement, dans lequel ledit élément d'amarrage est de largeur axiale variable, depuis une valeur maximale inférieure à 50% de la largeur axiale (51S) dudit bloc, ladite largeur axiale allant en décroissant lorsque l'on se déplace radialement vers le haut, ledit élément d'amarrage étant constitué d'un mélange caoutchouteux de dureté supérieure à la dureté du mélange caoutchouteux du reste de la bande de roulement.

14. Pneumatique selon la revendication 13, dans lequel l'angle des deux parois latérales dudit élément d'amarrage est compris entre 35 et 45 degrés.

15. Pneumatique selon l'une des revendications 13 ou 14, dans lequel le matériau constitutif de l'élément d'amarrage a un module d'allongement MA10 supérieur à 10 MPa.

## Patentansprüche

1. Luftreifen (1), umfassend:
- zwei Wülste (4);
- zwei Seitenflächen (3), die mit den Wülsten (4) verbunden sind;
- einen Deckenbereich (2), wobei ein Deckenbereich jeder Seite mit dem radial äußeren Ende jeder der Seitenflächen verbunden ist, wobei der Deckenbereich umfasst:
* eine Gürtelverstärkung (6) mit einer axialen Breite W,
* eine Lauffläche (5), wobei die Lauffläche eine Vielzahl von Skulpturblöcken (50) umfasst, wobei zwei axial nebeneinander liegende Skulpturblöcke durch eine Nut (7) getrennt sind, die sich zumindest teilweise in Umfangsrichtung erstreckt, wobei jede Nut radial nach innen durch einen Nutboden (70) begrenzt ist;
**dadurch gekennzeichnet, dass** das Material, aus dem die Lauffläche (5) besteht, ein dynamisches Schermodul G* kleiner als 1,25 MPa, gemessen bei 60 °C und unter einer alternierenden Spannung von 10 Hz von 0,7 MPa hat, und dass der Deckenbereich eine Verstärkungsschicht (8) aus einem Verstärkungsmaterial mit in Umfangsrichtung konstanter Elastizität umfasst, wobei sich die Verstärkungsschicht axial auf einer Breite WR erstreckt, die mindestens 50 % der axialen Breite W der Gürtelverstärkung ausmacht, und sich radial auf einer Dicke T zwischen dem radial oberen Ende der Gürtelverstärkung (6) und einer radial oberen Grenze erstreckt, die sich radial zum Inneren des Nutbodens (70) hin befindet, wobei das Material mit in Umfangsrichtung konstanter Elastizität, aus dem die Verstärkungsschicht besteht, ein Modul MA10 über 10 MPa aufweist.

2. Luftreifen nach Anspruch 1, bei dem die Dicke T kleiner als 75 % der Dicke der Lauffläche am Nutboden ist.

3. Luftreifen nach einem der Ansprüche 1 oder 2, bei dem das Material mit in Umfangsrichtung konstanter Elastizität, aus dem die Verstärkungsschicht besteht, ein Modul M10 über 30 MPa aufweist.

4. Luftreifen nach einem der Ansprüche 1 bis 3, bei dem die Verstärkungsschicht kontinuierlich und aus isotropem Material ist.

5. Luftreifen nach einem der Ansprüche 1 bis 4, bei dem mindestens 70 % der Breite WR der Verstärkungsschicht auf einer Seite der Äquatorialebene senkrecht auf die Drehachse des Reifens angeordnet sind.

6. Luftreifen nach einem der Ansprüche 1 bis 5, bei dem sich die Verstärkungsschicht auf einer Breite WR erstreckt, die mindestens gleich 70 % der axialen Breie W der Gürtelverstärkung ist.

7. Luftreifen nach einem der Ansprüche 1 bis 6, bei dem das Verstärkungsmaterial vom Typ Elastomer ist.

8. Luftreifen nach einem der Ansprüche 1 bis 6, bei dem das Verstärkungsmaterial vom thermoplastischen Typ ist.

9. Luftreifen nach einem der Ansprüche 1 bis 8, bei dem das Material, aus dem die Lauffläche (5) besteht, ein dynamisches Schermodul G* kleiner als 1,1 MPa hat.

10. Luftreifen nach einem der Ansprüche 1 bis 8, bei dem das Material, aus dem die Lauffläche (5) besteht, ein dynamisches Schermodul G* kleiner als 0,9 MPa hat.

11. Luftreifen nach einem der Ansprüche 1 bis 10, umfassend eine aufgeschrumpfte Schicht (64), die von aufgeschrumpften Verstärkungen gebildet ist, wobei die aufgeschrumpften Verstärkungen mit der Umfangsrichtung einen Winkel höchstens gleich 5° bilden, und wobei die aufgeschrumpfte Schicht radial außerhalb der Gürtelverstärkung (6) angeordnet ist.

12. Luftreifen nach einem der Ansprüche 1 bis 10, umfassend eine aufgeschrumpfte Schicht (64), die von aufgeschrumpften Verstärkungen gebildet ist, wobei die aufgeschrumpften Verstärkungen mit der Umfangsrichtung einen Winkel höchstens gleich 5° bilde, und wobei die aufgeschrumpfte Schicht radial außerhalb der Verstärkungsschicht (8) angeordnet ist.

13. Luftreifen nach einem der Ansprüche 1 bis 12, bei dem mindestens ein Skulpturblock ein Verankerungselement (12) umfasst, das sich radial von der radial äußeren Fläche (80S) der Verstärkungsschicht (8S) nach außen zur Lauffläche (5) bis zu einer radialen Höhe größer als 75 % der radialen Dicke der Lauffläche erstreckt, wobei das Verankerungselement von variabler axialer Breite ist, ausgehend von einem Maximalwert unter 50 % der axialen Breite (51S) des Blocks, wobei die axiale Breite bei radialer Verlagerung nach oben abnehmend ist, wobei das Verankerungselement von einem Kautschukgemisch mit einer größeren Härte als die Härte des Kautschukgemisches der restlichen Lauffläche gebildet ist.

14. Luftreifen nach Anspruch 13, bei dem der Winkel der zwei Seitenwände des Verankerungselements zwischen 35 und 45 Grad beträgt.

15. Luftreifen nach einem der Ansprüche 13 oder 14, bei dem das Material, aus dem das Verankerungselement besteht, ein Dehnungsmodul MA10 größer als 10 MPa hat.

## Claims

1. Tyre (1) comprising:
- two beads (4);
- two flanks (3) which are connected to the beads (4);
- an upper portion (2), an upper portion which is connected at each side to the radially outer end of each of the flanks, the upper portion comprising:
• a belt reinforcement (6) which has an axial width W,
• a tread band (5), the tread band comprising a plurality of sculpture blocks (50), two axially adjacent sculpture blocks being separated by a groove (7) which extends at least partially circumferentially, each groove being delimited radially towards the inner side by a groove base (70);
**characterized in that** the material which constitutes the tread band (5) has a dynamic shear modulus G* less than 1.25 MPa, measured at 60°C and under an alternating stress at 10 Hz of 0.7 MPa, **in that** the upper portion comprises a reinforcement layer (8) of reinforcement material with a constant resilience circumferentially, the reinforcement layer extending axially over a width WR which is a minimum of 50% of the axial width W of the belt reinforcement, and extending radially over a thickness T between the radially upper end of the belt reinforcement (6) and an upper radial limit located radially towards the inner side of the groove base (70), the material with constant resilience circumferentially which constitutes the reinforcement layer having a modulus MA10 greater than 10 MPa.

2. Tyre according to Claim 1, wherein the thickness T is less than 75% of the thickness of the tread band at the groove base.

3. Tyre according to either Claim 1 or Claim 2, wherein the material which has constant resilience circumferentially and which constitutes the reinforcement layer has a modulus MA10 greater than 30 MPa.

4. Tyre according to any one of Claims 1 to 3, wherein the reinforcement layer is continuous and of isotropic material.

5. Tyre according to any one of Claims 1 to 4, wherein at least 70% of the width WR of the reinforcement layer is arranged at a side of the equatorial plane perpendicular to the rotation axis of the tyre.

6. Tyre according to any one of Claims 1 to 5, wherein the reinforcement layer extends over a width WR which is a minimum of 70% of the axial width W of the belt reinforcement.

7. Tyre according to any one of Claims 1 to 6, wherein the reinforcement material is of the elastomer type.

8. Tyre according to any one of Claims 1 to 6, wherein the reinforcement material is of the thermoplastic type.

9. Tyre according to one of Claims 1 to 8, wherein the material which constitutes the tread band (5) has a dynamic shear modulus G* less than 1.1 MPa.

10. Tyre according to one of Claims 1 to 8, wherein the material which constitutes the tread band (5) has a dynamic shear modulus G* less than 0.9 MPa.

11. Tyre according to one of Claims 1 to 10, comprising a hooping sheet (64) which is constituted by hooping reinforcements, the hooping reinforcements forming, with the circumferential direction, an angle which is at a maximum 5°, and wherein the hooping sheet is arranged radially at the outer side of the belt reinforcement (6).

12. Tyre according to one of Claims 1 to 10, comprising a hooping sheet (64) which is constituted by hooping reinforcements, the hooping reinforcements forming with the circumferential direction an angle which is at a maximum 5°, and wherein the hooping sheet is arranged radially externally relative to the reinforcement layer (8).

13. Tyre according to one of Claims 1 to 12, wherein at least one sculpture block comprises a securing element (12) which extends radially from the radially external surface (80S) of the reinforcement layer (8S) towards the outer side of the tread band (5) up to a radial height greater than 75% of the radial thickness of the tread band, wherein the securing element has a variable axial width, from a maximum value less than 50% of the axial width (51S) of the block, the axial width decreasing during movement radially upwards, the securing element being constituted by a rubber-like admixture having a hardness greater than the hardness of the rubber-like admixture of the remainder of the tread band.

14. Tyre according to Claim 13, wherein the angle of the two side walls of the securing element is between 35 and 45 degrees.

15. Tyre according to either Claim 13 or Claim 14, wherein the material which constitutes the securing element has a reciprocal value of modulus of elasticity MA10 greater than 10 MPa.
